# EUROPEAN PATENT APPLICATION

(11) **EP 4 539 544 A1**
(43) Date of publication of application: **16.04.2025**
(21) Application number: 24203558.2
(22) Date of filing: 30.09.2024
(51) Int. Cl.: H04W 36/12, H04W 36/00, H04L 65/00, H04W 36/30, H04W 36/22, H04W 36/38, H04W 84/04, H04W 88/14, H04W 88/16

(54) **COMMUNICATION CONTROL DEVICE, COMMUNICATION CONTROL METHOD, AND CELLULAR NETWORK**

(30) Priority: 11.10.2023 JP 2023176226
(71) Applicant: Toyota Jidosha Kabushiki Kaisha, Toyota-shi, Aichi-Ken 471-8571 (JP)
(72) Inventor: ZHONG, Lei, Toyota-shi, Aichi-ken 471-8571 (JP); SHAO, Xiao, Toyota-shi, Aichi-ken 471-8571 (JP); LEE, Chunghan, Toyota-shi, Aichi-ken 471-8571 (JP); ABE, Hiroshi, Toyota-shi, Aichi-ken 471-8571 (JP); FURUSAWA, Toru, Toyota-shi, Aichi-ken 471-8571 (JP); OMI, Satoshi, Toyota-shi, Aichi-ken 471-8571 (JP)
(74) Representative: Simmons & Simmons

(57) **Abstract**

A communication control device (15) includes a processor (31) configured to control switching of a partner of communication with a mobile terminal (10) for first traffic from a first edge server (2) to a second edge server (2) in a cellular network (3) when a switching condition for the first traffic based on a reduction in quality of communication related to the first traffic at present or in future is met and a second edge server (2) capable of taking over the communication related to the first traffic is discovered in a state in which the mobile terminal (10) is performing communication related to the first traffic and second traffic with the first edge server (2) via the cellular network (3), an allowable delay for the second traffic being longer than an allowable delay for the first traffic.

## Description

### BACKGROUND OF THE INVENTION

### 1. Field of the Invention

The present disclosure relates to a communication control device, a communication control method, and a cellular network.

### 2. Description of Related Art

There exists the following technology. Middleware in a cloud system is provided with a monitoring function, a switching function, and a redistribution function. The monitoring function monitors the status of a network and the operating status of each of a cloud server, an edge server, and a user device. The switching function dynamically switches the system configuration, including the network topology, based on the monitoring result. The redistribution function redistributes service operation destinations as the system configuration is switched (Japanese Unexamined Patent Application Publication No. 2019-135578 (JP 2019-135578 A), for example).

### SUMMARY OF THE INVENTION

The present disclosure provides a communication control device, a communication control method, and a cellular network that enable a mobile terminal to perform suitable communication with an edge server for predetermined traffic that passes by way of a cellular network.

A first aspect of the present disclosure provides a communication control device including a processor configured to control switching of a partner of communication with a mobile terminal for first traffic from a first edge server to a second edge server in a cellular network when a switching condition for the first traffic based on a reduction in quality of communication related to the first traffic at present or in future is met and a second edge server capable of taking over the communication related to the first traffic is discovered in a state in which the mobile terminal is performing communication related to the first traffic and second traffic with the first edge server via the cellular network, an allowable delay for the second traffic being longer than an allowable delay for the first traffic.

In the communication control device according to the above aspect, the processor may be configured to perform control so as to switch a partner of communication with the mobile terminal for the second traffic from the first edge server to an edge server other than the second edge server or to a cloud server when the switching condition is met but the second edge server is not discovered.

In the communication control device according to the above aspect, the processor may be configured to perform control so as to stop communication related to third traffic when the switching condition is met when the mobile terminal and the first edge server are performing communication related to the first traffic, the second traffic, and the third traffic via the cellular network, an allowable delay for the third traffic being longer than the allowable delay for the second traffic.

In the communication control device according to the above aspect, the switching condition for the first traffic may be at least one selected from among a network delay exceeding a threshold, a load on the first edge server exceeding a threshold, jitter exceeding an allowable range, a throughput exceeding a threshold, a packet error rate exceeding a threshold, a demand forecast amount exceeding a threshold, and a moving speed of the mobile terminal exceeding a threshold.

In the communication control device according to the above aspect, the first traffic may be traffic of real-time data related to a metaverse.

In the communication control device according to the above aspect, the second traffic may be traffic of data transmitted on a best effort basis.

In the communication control device according to the above aspect, the communication control device may constitute the cellular network.

A second aspect of the present disclosure provides a communication control method including a communication control device controlling switching of a partner of communication with a mobile terminal related to first traffic from a first edge server to a second edge server in a cellular network when a switching condition for the first traffic based on a reduction in quality of communication related to the first traffic at present or in future is met and a second edge server capable of taking over the communication related to the first traffic is discovered in a state in which the mobile terminal is performing communication related to the first traffic and second traffic with the first edge server via the cellular network, an allowable delay for the second traffic being longer than an allowable delay for the first traffic.

In the communication control method according to the above aspect, may further include the communication control device performing control so as to switch a partner of communication with the mobile terminal related to the second traffic from the first edge server to an edge server other than the second edge server or to a cloud server when the switching condition is met but the second edge server is not discovered.

In the communication control method according to the above aspect, may further include the communication control device performing control so as to stop communication related to third traffic when the switching condition is met when the mobile terminal and the first edge server are performing communication related to the first traffic, the second traffic, and the third traffic via the cellular network, an allowable delay for the third traffic being longer than the allowable delay for the second traffic.

In the communication control method according to the above aspect, the switching condition may be at least one selected from among a network delay exceeding a threshold, a load on the first edge server exceeding a threshold, jitter exceeding an allowable range, a throughput exceeding a threshold, a packet error rate exceeding a threshold, a demand forecast amount exceeding a threshold, and a moving speed of the mobile terminal exceeding a threshold.

In the communication control method according to the above aspect, the first traffic may be traffic of real-time data related to a metaverse.

In the communication control method according to the above aspect, the second traffic may be traffic of data transmitted on a best effort basis.

In the communication control method according to the above aspect, the communication control device may constitute the cellular network.

A third aspect of the present disclosure provides a cellular network to be connected to a mobile terminal, including a processor configured to switch a partner of communication with the mobile terminal related to first traffic from a first edge server to a second edge server when a switching condition for the first traffic based on a reduction in quality of communication related to the first traffic at present or in future is met and a second edge server capable of taking over the communication related to the first traffic is discovered in a state in which the mobile terminal is performing communication related to the first traffic and second traffic with the first edge server via the cellular network, an allowable delay for the second traffic being longer than an allowable delay for the first traffic.

In the cellular network according to the above aspect, the processor may be configured to determine to switch a partner of communication with the mobile terminal related to the second traffic from the first edge server to an edge server other than the second edge server or a to cloud server when the switching condition is met but the second edge server is not discovered.

In the cellular network according to the above aspect, the processor may be configured to perform control so as to stop communication related to third traffic when the switching condition is met when the mobile terminal and the first edge server are performing communication related to the first traffic, the second traffic, and the third traffic via the cellular network, an allowable delay for the third traffic being longer than the allowable delay for the second traffic.

In the cellular network according to the above aspect, the switching condition for the first traffic may be at least one selected from among a network delay exceeding a threshold, a load on the first edge server exceeding a threshold, jitter exceeding an allowable range, a throughput exceeding a threshold, a packet error rate exceeding a threshold, a demand forecast amount exceeding a threshold, and a moving speed of the mobile terminal exceeding a threshold.

In the cellular network according to the above aspect, the first traffic may be traffic of real-time data related to a metaverse.

In the cellular network according to the above aspect, the second traffic may be traffic of data transmitted on a best effort basis.

In the cellular network according to the above aspect, the communication control device may constitute the cellular network.

Other aspects of the present disclosure may include a communication system including the communication control device described above, a program causing a computer to operate as the communication control device, a computer-readable storage medium storing the program, etc.

According to the present disclosure, it is possible to enable a mobile terminal to perform suitable communication with an edge server for specific traffic that passes by way of a cellular network.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 illustrates an example of the configuration of a communication system according to an embodiment;
FIG. 2 illustrates the details of network nodes (components) that constitute a cellular network;
FIG. 3 is a table indicating a switching condition for first traffic;
FIG. 4A illustrates an example of the configuration of an information processing device (computer) that is operable as a communication control device and a network node;
FIG. 4B illustrates another example of the configuration of an information processing device (computer) that is operable as a communication control device and a network node;
FIG. 5A illustrates an example of first operation (first edge server switching method) in the communication system;
FIG. 5B illustrates another example of first operation (first edge server switching method) in the communication system;
FIG. 6 is a sequence diagram illustrating a first operation example (edge server switching method) in the communication system;
FIG. 7 illustrates a second operation example (edge server switching method) in the communication system;
FIG. 8 illustrates the second operation example in the communication system;
FIG. 9 is a sequence diagram illustrating a third operation example in the communication system; and
FIG. 10 illustrates the third operation example.

### DETAILED DESCRIPTION OF EMBODIMENTS

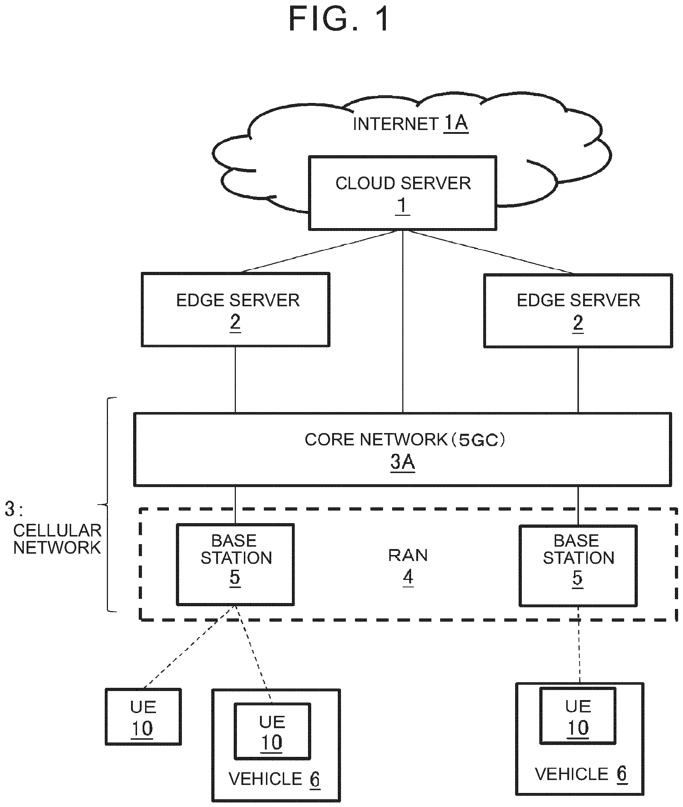

A communication control device, a communication control method, and a cellular network according to an embodiment will be described below with reference to the drawings. The configuration of the following embodiment is illustrative, and the present disclosure is not limited to the configuration of the embodiment. FIG. 1 illustrates an example of a communication system according to the embodiment. The communication system includes a cellular network 3 composed of a core network 3A and a radio access network (RAN) 4, mobile terminals (wireless terminals; hereinafter referred to as user equipment (UE)) 10, a cloud server 1, and one or more edge servers (also called mobile edge computing (MEC) servers and edge application servers (EASs)) 2.

The cloud server 1 is connected to an external network such as the Internet 1A. The UE 10 can transmit data to the cloud server 1 and receive data from the cloud server 1 by being connected to the cloud server 1 via the cellular network 3.

The edge servers 2 are servers that have the same function as the cloud server 1, and are placed at locations closer to the UEs 10 than the cloud server 1. When the length of a delay (latency) due to the distance between the UE 10 and the cloud server 1 is not suitable for providing a predetermined service, the UE 10 is connected to the edge server 2 in place of the cloud server 1. This allows the UE 10 to receive the same service as when the UE 10 is connected to the cloud server 1.

The edge servers 2 may be disposed outside the core network 3A (called a central site), or may be disposed in the cellular network 3 (called a local site). A plurality of edge servers 2 is provided so as to be able to cope with variations (handover) in position due to movement of the UE 10.

In the present embodiment, the cloud server 1 and the edge servers 2 are used to provide a service related to a metaverse (a three-dimensional virtual space constructed on the Internet) to users of the UEs 10. For example, the cloud server 1 provides image data in the metaverse space to the UEs 10, allowing the users to carry out various events by operating an avatar (an alter ego of the user) in the metaverse space displayed on the screen. The UEs 10 may be carried by pedestrians, or may be mounted on mobile bodies such as vehicles 6. The vehicles 6 may be vehicles driven by humans, or may be autonomously driven vehicles.

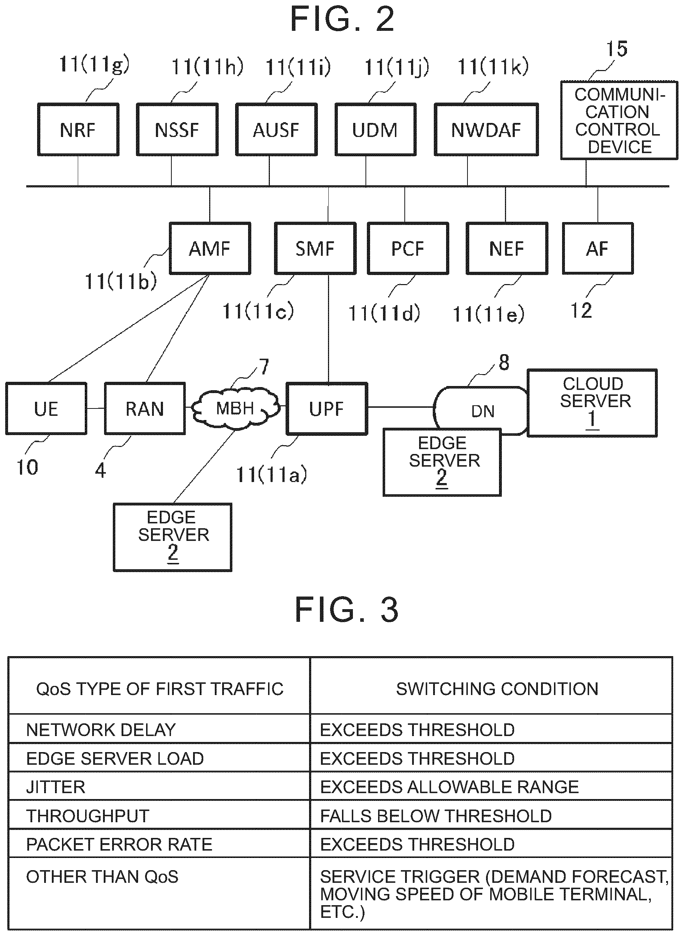

FIG. 2 illustrates the details of network nodes (components) that constitute the cellular network 3. The cellular network 3 may be a fourth-generation mobile communication system (4G network (long term evolution (LTE) network)), a fifth-generation mobile communication system (5G network), or a sixth-generation mobile communication system (6G network), for example. In the present embodiment, the cellular network 3 is a 5G network.

In FIG. 2, the UEs 10 are terminals of users (subscribers). The radio access network (RAN) 4 is a network for access to the core network (called a 5G core (5GC)) 3A. The RAN 4 is constituted by a number of base stations (called gNBs) 5 required to cover the communication area of the UEs 10. The base stations 5 are wirelessly connected to one or more UEs 10. A data network (DN) 8 is connected to a user plane (UPF 11a) of the core network 3A.

The 5GC is constituted by a collection of components (network nodes) that have predetermined functions called network functions (NFs). FIG. 2 illustrates the following as NFs 11 that constitute the 5GC. In FIG. 2, the NFs 11 are indicated by thick rectangles. NFs 11a to 11k are each a function implemented by one or more information processing devices (computers) executing a program.
User Plane Function (UPF) 11a
Access and Mobility Management Function (AMF) 11b
Session Management Function (SMF) 11c
Policy Control Function (PCF) 11d
Network Exposure Function (NEF) 11e
Network Repository Function (NRF) 11g
Network Slice Selection Function (NSSF) 11h
Authentication Server Function (AUSF) 11i
Unified Data Management (UDM) 11j
Network Data Analytics Function (NWDAF) 11k

The UPF 11a is the only network node for the user plane in the 5GC. The network nodes other than the UPF 11a are network nodes for the control plane. The UPF 11a performs routing and forwarding, inspection, and quality of service (QoS) handling of user packets (user plane packets that are transmitted and received by the UE 10). The AMF 11b is a serving device for the UEs 10 in the core network 3A. The AMF 11b accommodates the RAN 4 (base stations 5) and performs subscriber authentication, location (mobility) management for the UEs 10, etc. The UDM 11j provides subscriber information or acquires, registers, deletes, and changes the state of the UEs 10.

The SMF 11c manages protocol data unit (PDU) sessions and controls the UPF 11a to perform QoS control and policy control. The PDU session is a virtual communication channel for data transfer between the UE 10 and the DN 8. The DN 8 is a data network (such as the Internet) outside the 5GC (called a central site). The cloud server 1 is connected to the DN 8.

The PCF 11d performs QoS control, policy control, charging control, etc. under the control of the SMF 11c. In the QoS control, communication quality control such as priority packet transfer is performed. In the policy control, communication control such as QoS, packet transfer handling, charging, etc. based on network or subscriber information is performed. The NEF 11e serves to mediate communication between an external node such as an application function (AF) 12 and a node within the control plane. The AF 12 operates as an application server (external server) located outside the 5GC. However, the AF 12 may be disposed as a device that is external to the core network 3A, or may be disposed as a constituent element of the core network 3A.

The NRF 11g stores and manages information on the NFs (e.g., AMF, SMF, and UPF) within the 5GC. The NRF 11g can reply to an inquiry source with a plurality of candidate NFs in response to an inquiry regarding the NF desired to be used.

The NSSF 11h has a function to select a network slice to be used by a subscriber from network slices created by network slicing. The network slice is a virtual network having specifications according to the intended use.

The AUSF 11i is a subscriber authentication server that performs subscriber authentication under the control of the AMF 11b. The UDM 11j stores subscriber related information. The NWDAF 11k has a function to collect and analyze data from each NF 11, an operations, administration, and maintenance (OAM) terminal, a device that is external to the 5GC, etc. The NWDAF 11k is an NF that provides network analysis information. The OAM terminal has a function to operate, administer, and maintain the core network 3A (5GC).

When the UE 10 establishes a wireless connection with the base station 5, the UE 10 transmits predetermined information to the AMF 11b via the base station 5. The AMF 11b registers position information on the UE 10 in the UDM 11j. When the UE 10 is successfully authenticated by the AUSF 11i, the AMF 11b instructs the SMF 11c to establish a PDU session for the UE 10 to communicate with the cloud server 1 or the edge server 2. The SMF 11c selects the UPF 11a corresponding to the cloud server 1 or the edge server 2, and instructs the selected UPF 11a to establish a PDU session. The UPF 11a establishes a PDU session between the UE 10 and the cloud server 1 or the edge server 2.

The edge server 2 is connected to the UPF 11a. As discussed above, the edge server 2 can be disposed either or both outside (central site) and inside (local site) the core network 3A. The UPF 11a disposed at the boundary with the DN 8 is called a PDU session anchor (PSA)-UPF (anchor UPF). On the contrary, the UPF disposed in the local site and disposed continuously with the PSA-UPF in the central site is called an intermediate UPF. A PSA-UPF for the DN in the local site can also be disposed in the local site. A mobile back haul (MBH) 7 is a network formed by a plurality of relay stations (such as routers) that forwards IP packets transmitted from the base stations 5.

In the present embodiment, a plurality of PDU sessions that matches the type of data transmitted and received between the UE 10 and the edge server 2 is established between the UE 10 and the edge server 2.

In the present embodiment, by way of example, data are classified into the following three types (1) to (3), and transferred using different traffic (PDU sessions). That is, different PDU sessions are established for the respective types of data. The number of types of data may be other than three.
(1) Data with real-time properties to be used to provide services related to the metaverse (referred to as metaverse real-time data or first data).
(2) Data to be transmitted on a best effort basis (referred to as second data).
(3) Data to be collected by the edge server 2 or the cloud server 1 (referred to as third data).

Of the three types of data, the third data have the longest delay (latency) time allowed for transfer, the second data have the second longest allowable delay, and the first data have the shortest allowable delay.

A PDU session (referred to as a first session) for first traffic as traffic of the first data is established between the UE 10 and the UPF 11a. A PDU session (referred to as a second session) for second traffic as traffic of the second data is also established. A PDU session (referred to as a third session) for third traffic as traffic of the third data is also established.

A communication control device 15 that controls switching of the edge server 2 is provided in the core network 3A (5GC). In the present embodiment, the communication control device 15 is provided as a new NF in the 5GC. However, the function of the communication control device 15 may be implemented in the existing NF such as the NWDAF 11k. Alternatively, the communication control device 15 may be a device (AF 12) that is external to the 5GC and connected to the 5GC via the NEF 11e.

The communication control device 15 collects information that indicates the status of a network between the UE 10 and the edge server 2 and around the edge server 2 or information that indicates a load on the edge server 2, and monitors the network status and the load on the edge server 2.

When it is determined as a result of monitoring that a predetermined switching condition is met, the communication control device determines whether an edge server 2 (referred to as a second edge server) that can replace the present edge server 2 (referred to as a first edge server) has been discovered. When it is determined that the second edge server has been discovered, the communication control device outputs information (control signal) for switching communication related to traffic for the first data from the first edge server to the second edge server. The core network 3A (5GC) switches the edge server 2 according to the decision.

The switching condition is a condition that indicates a reduction in the quality of communication of first traffic (traffic related to the metaverse) at the present or in the future. For example, the condition that indicates a reduction in the quality of communication (quality of service (QoS)) at the present can be at least one selected from a network delay exceeding a threshold, a load on the edge server exceeding a threshold, jitter exceeding an allowable range, a throughput reducing to fall below a threshold, and a packet error rate exceeding a threshold, as indicated in FIG. 3. Examples of the condition that indicates a reduction in the quality of communication in the future include a demand forecast exceeding a threshold and the moving speed of the UE 10 (such as a moving average of the moving speed) exceeding a threshold. A demand forecast exceeding a threshold can indicate an increase in the load on the edge server 2 in the future. The moving speed of the UE 10 exceeding a threshold means that the round trip time (RTT) will become longer (the allowable delay will not be met in the future). For the thresholds that are used to determine whether the switching condition is met, two or more levels (classes) may be provided for the demand forecast and the moving speed, and a different threshold may be prepared for each level.

An edge server 2 for which it is expected that an index (such as a network delay) of the quality of communication that was used to determine whether the switching condition was met will be improved (the quality of communication will be improved) by switching may be selected as the second edge server that can replace the first edge server. For example, if there is an edge server 2 that is closer to the position of the UE 10 than the first edge server, the edge server 2 is determined as the second edge server.

A search for the second edge server is made using a domain name system (DNS) system, for example. The UE 10 transmits a DNS query that requests an internet protocol (IP) address etc. of the edge server 2. The DNS query is received by a DNS server (or a DNS resolver), for example, and the DNS server can return a response that includes the IP address etc. of the edge server 2 that matches the DNS query to the UE 10. When the IP address etc. of the edge server 2 is indicated in the response to the DNS query, it is indicated that a desired edge server 2 has been discovered.

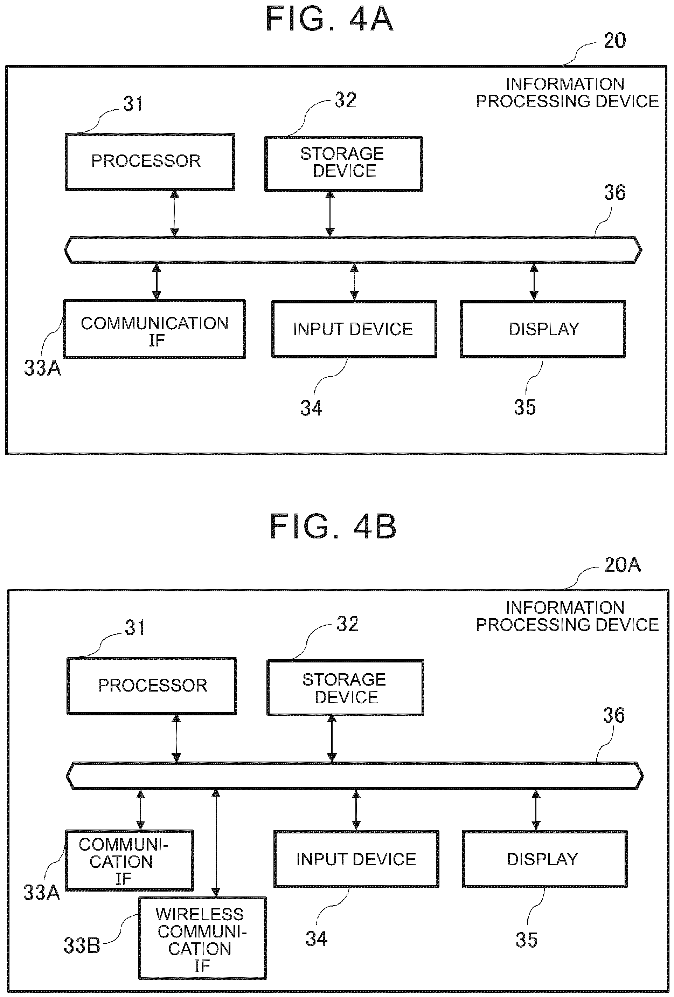

FIG. 4A illustrates an example of the configuration of an information processing device (computer) that is operable as the NFs 11a to 11k, the AF 12, or the communication control device 15. FIG. 4B illustrates an example of the configuration of an information processing device that is operable as the UE 10.

In FIG. 4A, an information processing device 20 includes a processor 31, a storage device 32, a communication interface (communication IF) 33A, an input device 34, and a display 35 connected to each other via a bus 36, by way of example.

The storage device 32 stores various programs and data. The processor 31 is an example of a control unit (controller), and may be a central processing unit (CPU), a digital signal processor (DSP), a graphics processing unit (GPU), or a combination thereof, for example. The processor 31 executes the programs stored in the storage device 32, and performs various processes such as calculations or processing using the data stored in the storage device 32 etc. By executing the programs, the information processing device 20 can perform operation of each of the NFs 11, the AF 12, and the communication control device 15. The communication IF 33A is a communication interface circuit for a wired network. The input device 34 includes buttons, keys, a touch panel, etc. that are used to input information, make settings, etc. The display 35 is used to display information. An information processing device 20A includes a wireless communication IF 33B in addition to the components of the information processing device 20. The wireless communication IF 33B is used for wireless communication with the base stations 5. The information processing device 20A can perform various operations as the UE 10 by the processor 31 of the information processing device 20A executing the programs.

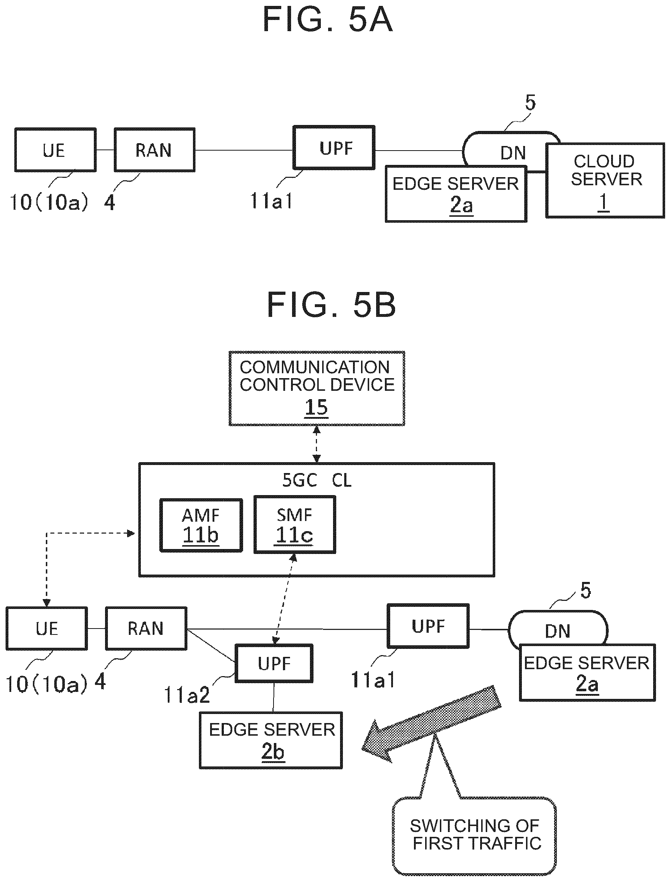

FIGS. 5A and 5B illustrate an example of first operation (first edge server switching method) in the communication system. In FIG. 5A, a UE 10a is connected to a UPF 11a1 via the RAN 4 in the user plane. The UPF 11a1 is a PSA-UPF in the central site, and connected to the DN 8 in the central site. An edge server 2a is connected to the DN 8.

The UE 10a communicates with the edge server 2a in order to receive a service related to the metaverse. Therefore, PDU sessions (first to third sessions) related to the first, second, and third traffic are established between the UE 10a and the edge server 2a.

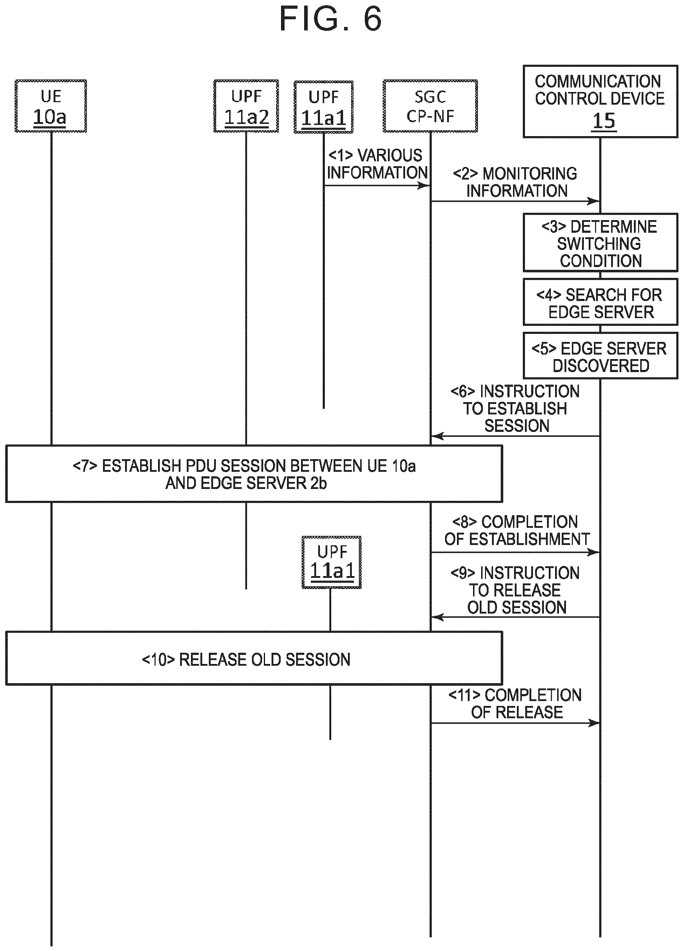

FIG. 6 is a sequence diagram illustrating a first operation example in the communication system. The UPF 11a1 collects information (such as a network delay, jitter, a throughput, and a packet error rate) about communication related to the first traffic between the UE 10a and the edge server 2a. In addition, the UPF 11a1 can obtain information that indicates a load on the edge server 2a from the edge server 2a or a component other than the edge server 2a, for example. The UPF 11a1 sends the acquired information to 5GC CP-NFs (FIG. 6 <1>). The 5GC CP-NFs are NFs (such as SMF and AMF) in the control plane in the 5GC.

The information from the UPF 11a1 is received by the SMF 11c among the 5GC CP-NFs, and sent to the communication control device 15 as monitoring information (FIG. 6 <2>). The communication control device 15 can acquire position information on the UE 10 registered in the UDM 11j, and calculate the moving speed of the UE 10a from variations in the position of the UE 10a along with the lapse of time, for example. The communication control device 15 can also receive information that indicates a demand forecast and that is input from the input device 34, for example. The method by which the communication control device 15 collects monitoring information is not limited to the example described above.

Operation of the communication control device 15 is performed by the processor 31 of the information processing device 20 that operates as the communication control device 15 executing the programs stored in the storage device 32. The communication control device 15 can perform monitoring using the monitoring information (analysis of the monitoring information), and perform a switching determination process (FIG. 6 <3>).

In the switching determination process, the communication control device 15 can determine whether one or more (a predetermined combination) of a plurality of switching conditions are met regarding communication of the first traffic between the UE 10a and the edge server 2a through the analysis of the monitoring information.

When it is determined that the switching conditions are met, the processor 31 of the communication control device 15 makes a search for the second edge server that can replace the edge server 2a as the first edge server (FIG. 6 <4>). For example, the communication control device 15 generates and transmits a DNS query that requests the IP address etc. of an edge server 2 (e.g. an edge server 2 in the local site) that is closer to the UE 10 than the edge server 2a. The DNS query is received by a DNS server, for example, and when the relevant edge server 2 is present, the DNS server returns a response to the DNS query including the IP address etc. of the edge server 2. A configuration in which the communication control device 15 commands the UE 10 or the NF in the 5GC to search for the second edge server (transmit a DNS query) and receives the result (content of a response) may be adopted.

When a response that includes the IP address etc. of the relevant edge server 2 is received (when the response includes the IP address etc. of the relevant edge server 2), the communication control device 15 determines that the second edge server has been discovered (FIG. 6 <5>). When the response does not include the IP address etc., when a response is not returned within a predetermined time, etc., on the contrary, the communication control device 15 can determine that the second edge server is not discovered.

When it is determined that the second edge server has been discovered, the communication control device 15 performs control for switching communication related to the first traffic from the first edge server to the second edge server. That is, the communication control device 15 outputs information (an instruction to establish a PDU session) for establishing a new PDU session with the second edge server for communication of the first traffic (FIG. 6 <6>). The instruction is sent to the NF in the 5GC or the UE 10, for example.

It is assumed that an edge server 2b disposed in the local site has been discovered as the second edge server as illustrated in FIG. 5B, for example. The edge server 2b is connected to a UPF 11a2 that operates as a PSA-UPF in the local site.

In response to the instruction to establish a PDU session, the procedure for establishing a PDU session between the UE 10 and the edge server 2b is executed (FIG. 6 <7>). For example, the SMF 11c selects the UPF 11a2, and instructs the UPF 11a2 to establish a PDU session between the UE 10a and the edge server 2b. This allows a new PDU session for the first traffic to be established between the UE 10 and the edge server 2b. A message (response) that indicates the completion of establishment of a PDU session is sent from the 5GC CP-NF to the communication control device 15 (FIG. 6 <8>).

The communication control device 15 sends information (an instruction to release) for releasing an old session (a PDU session between the UE 10a and the edge server 2a) to the 5GC CP-NF or the UE 10 (FIG. 6 <9>). Consequently, the procedure for releasing a PDU session between the UE 10a and the edge server 2a is executed (FIG. 6 <10>).

When the release procedure is executed, a message that indicates the completion of release is transmitted to the communication control device 15 (FIG. 6 <11>). In this manner, the edge server 2 is switched in a so-called make-before-break manner. Consequently, the first traffic is transmitted to both the edge server 2a and the edge server 2b until the old session is released. Switching from the edge server 2a to the edge server 2b is made seamlessly.

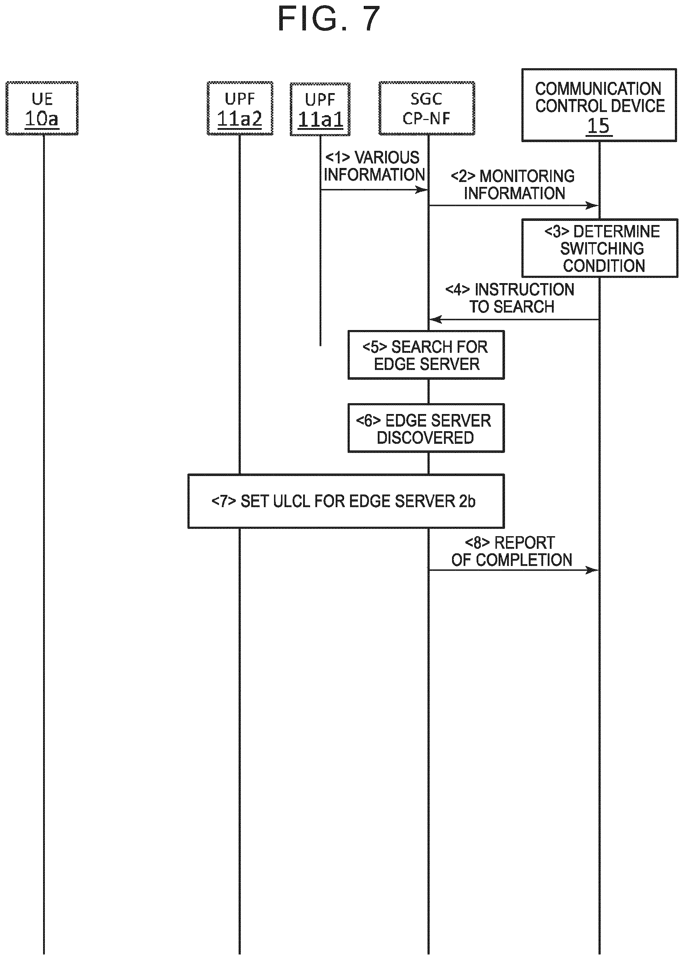

FIG. 7 is a sequence diagram illustrating a second operation example in the communication system. <1>, <2>, and <3> in FIG. 7 are the same as those according to the first operation example, and thus will not be described.

When it is determined that the switching condition is met, the communication control device 15 generates a DNS query for searching for the second edge server, and transmits the DNS query to the 5GC (FIG. 7 <4>).

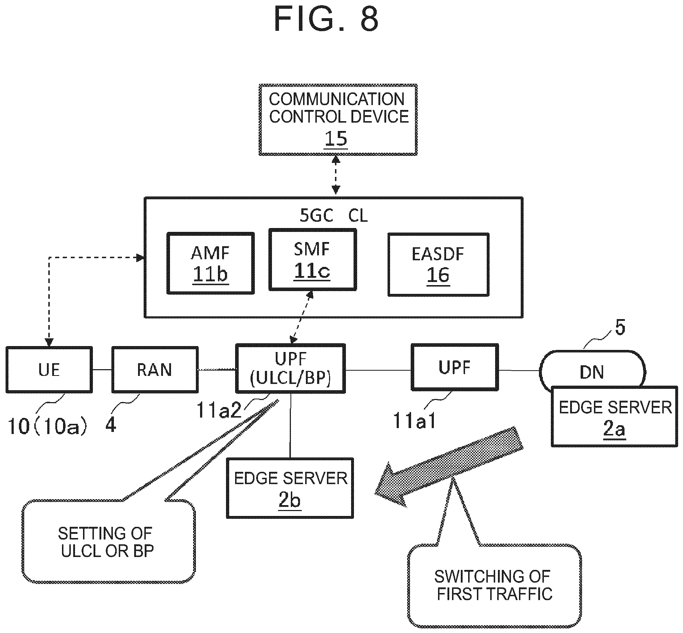

FIG. 8 illustrates the second operation example. As illustrated in FIG. 8, an edge application server discovery function (EASDF) 16 is provided in the 5GC as an NF that supports edge computing. The EASDF 16 receives the DNS query, and forwards the DNS query to the DNS server. Next, the EASDF 16 receives a DNS response, and it is determined that the second edge server has been discovered when the DNS response includes the IP address etc. of the edge server 2 (FIG. 7 <6>). A case where the IP address of the edge server 2b is included is assumed, for example.

In this case, the EASDF 16 notifies the SMF 11c of information (such as IP address) included in the DNS response. The SMF 11c inserts the UPF 11a2 as the PSA-UPF in the local site between the RAN 4 and the UPF 11a1 based on the information such as the IP address of the edge server 2. The SMF 11c also sets an uplink classifier (ULCL) for the UPF 11a2 (FIG. 7 <7>). When the ULCL is set, packets of the first traffic received by the UPF 11a2 and directed to the edge server 2 are to be forwarded to the edge server 2. The ULCL is also set so as to connect to traffic (second, third) other than that directed to the edge server 2. After that, a report of completion may be transmitted from the 5GC to the communication control device 15.

A configuration in which a DNS response is transmitted to the communication control device 15 and the communication control device 15 determines whether the second edge server has been discovered may be adopted in the sequence in FIG. 7. In this case, a modification can be made such that a ULCL setting instruction that includes the content of the DNS response is transmitted from the communication control device 15 to the SMF 11c when it is determined that the second edge server has been discovered.

In the second operation example, information is not delivered to the UE 10, and the edge server 2 can be switched on the network side. A branch point (BP) may be set for the UPF 11a2 in place of the ULCL. In this case, the UE 10a is notified of prefix information for multihoming, and this prefix information is added to data of the first traffic. The UPF 1 1a2 as the branch point can forward data of the first traffic directed to the edge server 2 to the edge server 2b according to the prefix information.

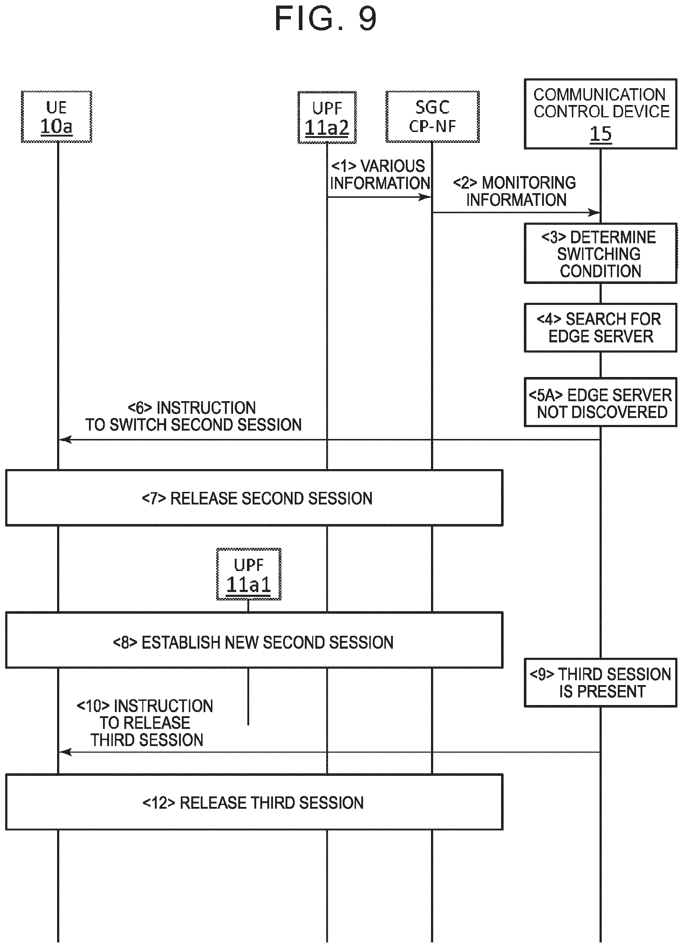

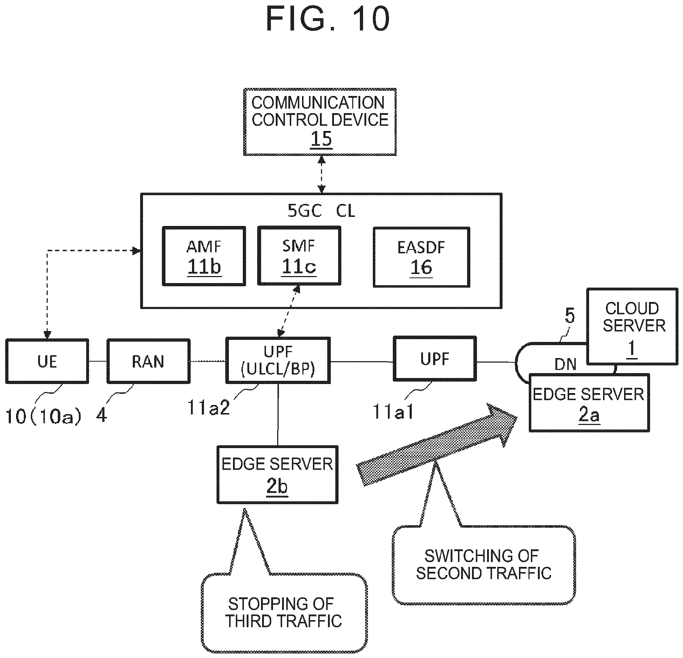

FIG. 9 is a sequence diagram illustrating a third operation example in the communication system. FIG. 10 illustrates the third operation example. In the third operation example, as illustrated in FIG. 10, it is assumed that the UE 10a establishes a PDU session related to first to third traffic with the edge server 2b via the UPF 11a2. <1>, <2>, <3>, and <4> in FIG. 9 are the same as those according to the first operation example (FIG. 6), and thus will not be described.

In the third operation example, however, it is assumed that the edge server 2 as the destination of switching of the first traffic is not discovered in response to a DNS query (or a response to the DNS query is not delivered within a predetermined period) (FIG. 9 <5>).

In this case, the communication control device 15 transmits an instruction to switch a second session, as a PDU session related to the second traffic, to the UE 10 (FIG. 9 <6>). A switching instruction may be sent to the UE 10 through a path that does not pass by way of the cellular network 3, or may be sent through a path that passes by way of the cellular network 3.

When a switching instruction is delivered to the UE 10a, the second session is released by the UE 10a and the NFs in the cellular network 3 including the UPF 11a (FIG. 9 <7>). Subsequent to the release of the second session, the procedure for establishing a new second session (a PDU session for communication related to the second traffic) for the edge server 2a located in the central site or the cloud server 1 (both known from the UE 10a) is performed (FIG. 9 <8>). Here, a PDU session between the UE 10a and the edge server 2a is established, by way of example. The second session is switched in a so-called break-before-make manner.

In the third operation example, when the edge server 2 as the destination of switching for the first traffic is not discovered, the second traffic is switched to the edge server 2a (which may be the cloud server 1) other than the edge server 2b. This makes it possible to decrease a load on the edge server 2b, which improves or is expected to improve the quality of communication related to the first traffic.

Operation in <9> to <12> in FIG. 9 is performed when it is determined that the switching condition is met. The operation can be combined with not only the third operation example but also the first and second operation examples. In <9> in FIG. 9, it is determined whether there is a third session, as a PDU session related to the third traffic, between the UE 10a and the edge server 2b. If there is no third session, operation in and after <10> in FIG. 9 is not performed.

When it is determined that there is a third session, the communication control device 15 sends an instruction to release the third session to the UE 10 (FIG. 9 <10>). A release instruction may be sent through a path that passes by way of the cellular network 3, or may be sent through a path that does not pass by way of the cellular network 3.

When the UE 10a receives the release instruction, the third session is released by the UE 10a and the NF in the cellular network 3 including the UPF 11a2. This prohibits (stops) transmission and reception of data related to the third traffic related to the third session. Hence, a load on the edge server 2b can be decreased.

In the embodiment, the UE 10 (an example of a mobile terminal) performs communication related to the first traffic and the second traffic with the edge server 2a via the cellular network 3. When a condition for switching the first traffic based on a reduction in the quality of communication related to the first traffic at the present or in the future is met in this state, a search is made for a second edge server that can take over communication related to the first traffic. When a second edge server is discovered, the processor 31 (an example of a control unit) of the communication control device 15 controls switching of the partner of communication with the UE 10 for the first traffic from the edge server 2a (an example of a first edge server) to the edge server 2b (second edge server) in the cellular network 3. This enables the UE 10 to perform suitable communication with the edge server 2 for predetermined traffic that passes by way of the cellular network 3.

With the embodiment, in addition, the processor 31 (control unit) of the communication control device 15 can perform the following when the switching condition is met but a second edge server is not present (a second edge server is not discovered). That is, as illustrated in FIG. 10, the processor 31 can perform control so as to switch the partner of communication with the UE 10 for the second traffic from the edge server 2b (FIG. 10: an example of a first edge server) to the edge server 2a (FIG. 10: an example of an edge server other than the second edge server) or the cloud server 1. Consequently, a load on the edge server 2 can be decreased.

With the embodiment, in addition, the communication control device 15 (processor 31) allows the UE 10 and the edge server 2 to perform communication related to the first traffic, the second traffic, and the third traffic via the cellular network 3. When the switching condition is met in this case, the communication control device 15 (processor 31) can perform control so as to stop communication related to the third traffic. Consequently, a load on the edge server 2 can be decreased.

The switching condition for the first traffic can be at least one selected from among a network delay exceeding a threshold, a load on the first edge server exceeding a threshold, jitter exceeding an allowable range, a throughput exceeding a threshold, a packet error rate exceeding a threshold, a demand forecast amount exceeding a threshold, and the moving speed of the UE 10 exceeding a threshold.

The first traffic may be traffic of real-time data related to the metaverse. The second traffic may be traffic of data transmitted on a best effort basis. The communication control device 15 may be a device that constitutes the cellular network 3, or may be a device outside the cellular network 3 and connected to the cellular network 3. The communication control device 15 (processor 31) may control switching of the first traffic in a make-before-break manner. The communication control device 15 (processor 31) may control switching of the second traffic in a break-before-make manner.

The above embodiment and modifications are merely illustrative, and the present disclosure may be modified as appropriate without departing from the spirit and scope of the present disclosure. The processes and means described in the present disclosure can be combined as desired as long as no technical contradiction occurs.

The processes described as being performed by a single device may be executed in a distributed manner by a plurality of devices. The processes described as being performed by different devices may be executed by a single device. In a computer system, the hardware configuration (server configuration) that implements functions can be flexibly changed.

The present disclosure can also be implemented by supplying a computer with a computer program that implements the functions described in relation to the above embodiment and causing one or more processors of the computer to read and execute the program. Such a computer program may be provided to the computer through a non-transitory computer-readable storage medium that is connectable to a system bus of the computer, or may be provided to the computer via a network. Examples of the non-transitory computer-readable storage medium include: any type of disk or disc such as a magnetic disk (floppy (registered trademark) disk, hard disk drive (HDD), etc.) and an optical disc (compact disc read-only memory (CD-ROM), digital versatile disc (DVD), Blu-ray disc, etc.); and any type of medium suitable for storing electronic instructions such as a read only memory (ROM), a random access memory (RAM), an erasable programmable read only memory (EPROM), an electrically erasable programmable read only memory (EEPROM), a magnetic card, a flash memory, and an optical card.

## Claims

1. A communication control device (15) comprising a processor (31) configured to control switching of a partner of communication with a mobile terminal (10) for first traffic from a first edge server (2) to a second edge server (2) in a cellular network (3) when a switching condition for the first traffic based on a reduction in quality of communication related to the first traffic at present or in future is met and the second edge server (2) capable of taking over the communication related to the first traffic is discovered in a state in which the mobile terminal (10) is performing communication related to the first traffic and second traffic with the first edge server (2) via the cellular network (3), an allowable delay for the second traffic being longer than an allowable delay for the first traffic.

2. The communication control device (15) according to claim 1, wherein the processor (31) is configured to perform control so as to switch a partner of communication with the mobile terminal (10) for the second traffic from the first edge server (2) to an edge server other than the second edge server (2) or to a cloud server when the switching condition is met but the second edge server (2) is not discovered.

3. The communication control device (15) according to claim 1 or 2, wherein the processor (31) is configured to perform control so as to stop communication related to third traffic when the switching condition is met when the mobile terminal (10) and the first edge server (2) are performing communication related to the first traffic, the second traffic, and the third traffic via the cellular network (3), an allowable delay for the third traffic being longer than the allowable delay for the second traffic.

4. The communication control device (15) according to any preceding claim, wherein the switching condition for the first traffic is at least one selected from among a network delay exceeding a threshold, a load on the first edge server (2) exceeding a threshold, jitter exceeding an allowable range, a throughput exceeding a threshold, a packet error rate exceeding a threshold, a demand forecast amount exceeding a threshold, and a moving speed of the mobile terminal (10) exceeding a threshold.

5. The communication control device (15) according to any preceding claim, wherein the first traffic is traffic of real-time data related to a metaverse.

6. The communication control device (15) according to any preceding claim, wherein the second traffic is traffic of data transmitted on a best effort basis.

7. The communication control device (15) according to any preceding claim 1, wherein the communication control device (15) constitutes the cellular network (3).

8. A communication control method comprising a communication control device (15) controlling switching of a partner of communication with a mobile terminal (10) related to first traffic from a first edge server (2) to a second edge server (2) in a cellular network (3) when a switching condition for the first traffic based on a reduction in quality of communication related to the first traffic at present or in future is met and the second edge server (2) capable of taking over the communication related to the first traffic is discovered in a state in which the mobile terminal (10) is performing communication related to the first traffic and second traffic with the first edge server (2) via the cellular network (3), an allowable delay for the second traffic being longer than an allowable delay for the first traffic.

9. The communication control method according to claim 8, further comprising the communication control device (15) performing control so as to switch a partner of communication with the mobile terminal (10) related to the second traffic from the first edge server (2) to an edge server other than the second edge server (2) or to a cloud server when the switching condition is met but the second edge server (2) is not discovered.

10. The communication control method according to claim 8 or 9, further comprising the communication control device (15) performing control so as to stop communication related to third traffic when the switching condition is met when the mobile terminal (10) and the first edge server (2) are performing communication related to the first traffic, the second traffic, and the third traffic via the cellular network (3), an allowable delay for the third traffic being longer than the allowable delay for the second traffic.

11. The communication control method according to any of claims 8 to 10, wherein the switching condition is at least one selected from among a network delay exceeding a threshold, a load on the first edge server (2) exceeding a threshold, jitter exceeding an allowable range, a throughput exceeding a threshold, a packet error rate exceeding a threshold, a demand forecast amount exceeding a threshold, and a moving speed of the mobile terminal (10) exceeding a threshold.

12. The communication control method according to any of claims 8 to 11, wherein the first traffic is traffic of real-time data related to a metaverse.

13. The communication control method according to any of claims 8 to 12, wherein the second traffic is traffic of data transmitted on a best effort basis.

14. A cellular network (3) configured to be connected to a mobile terminal (10), comprising a processor (31) configured to switch a partner of communication with the mobile terminal (10) related to first traffic from a first edge server (2) to a second edge server (2) when a switching condition for the first traffic based on a reduction in quality of communication related to the first traffic at present or in future is met and the second edge server (2) capable of taking over the communication related to the first traffic is discovered in a state in which the mobile terminal (10) is performing communication related to the first traffic and second traffic with the first edge server (2) via the cellular network (3), an allowable delay for the second traffic being longer than an allowable delay for the first traffic.

15. The cellular network (3) according to claim 14, wherein the processor(31) is configured to determine to switch a partner of communication with the mobile terminal (10) related to the second traffic from the first edge server (2) to an edge server other than the second edge server (2) or a to cloud server when the switching condition is met but the second edge server (2) is not discovered.
